# EUROPÄISCHE PATENTSCHRIFT

(11) **EP 3 580 534 B1**
(45) Veröffentlichungstag und Bekanntmachung des Hinweises auf die Patenterteilung: **29.09.2021**
(21) Anmeldenummer: 18702963.2
(22) Anmeldetag: 30.01.2018
(51) Int. Cl.: G01G 11/04, B65G 47/16

(54) **FÖRDER- UND DOSIEREINRICHTUNG**
CONVEYOR AND DOSING DEVICE
DISPOSITIF DE TRANSPORT ET DE DOSAGE

(30) Priorität: 09.02.2017 DE 102017001226
(43) Veröffentlichungstag der Anmeldung: 18.12.2019
(73) Patentinhaber: Schenck Process Europe GmbH, 64293 Darmstadt (DE)
(72) Erfinder: SCHUETZ, Andreas, 65474 Bischofsheim Hessen (DE); GOETZ, Stefan, 64342 Seeheim-Jugenheim Hessen (DE)
(86) Internationale Anmeldenummer: PCT/EP2018/052186
(87) Internationale Veröffentlichungsnummer: WO 2018/145940

(56) Entgegenhaltungen:
- CN-U- 205 661 981
- DE-A1- 4 103 815
- DE-U1-202014 007 282

## Beschreibung

Die Erfindung betrifft eine Förder- und Dosiervorrichtung gemäß dem Oberbegriff des Patentanspruchs 1. Derartige Plattenbänder oder Plattenbanddosierer sind aus dem Stand der Technik bekannt. Sie werden zur Förderung von Schüttgütern aller Art eingesetzt, um diese Mühlen, Trocknungsvorrichtungen oder Brecheranlagen möglichst gleichmäßig zuzuführen.

Aus der DE 1 456 699 A1ist beispielsweise ein Plattenbanddosierer bekannt, bei dem die Laufschiene aufgetrennt ist und der zu verwiegenden Abschnitt der Laufschiene jeweils auf mindestens einer Wägevorrichtung gelagert ist. Da bei Wägevorrichtungen in Form von Wägezellen grundsätzlich darauf zu achten ist, dass die Lasteinleitung zentrisch in Richtung der Messrichtung der Wägezelle erfolgt, da ansonsten mit Messungenauigkeiten oder Zerstörung der Wägezelle zu rechnen ist, sind bei dem Plattenbanddosierer aufwändige Lenkervorrichtungen im Bereich der Wägevorrichtungen angeordnet. Mit deren Hilfe soll vermieden werden, dass Horizontalkräfte aus dem Bandlauf oder aus Temperatureinflüssen zu Messfehlern führen.

Weiterhin ist aus der EP 0772 028 A1 ein Plattenbanddosierer bekannt, bei dem ein Teil der Laufschiene als Wägeschiene, an der Dehnungsmessstreifen appliziert sind, ausgebildet ist, so dass die Laufrollen des Plattenbandes direkt auf der Wägeschiene entlang laufen und somit die Gewichtskraft des Wägegutes auf dem Plattenband erfasst werden kann. Da die Wägeschiene eine gewisse Länge aufweisen aus Wägezellenstahl geformt und passgenau bearbeitet werden muss, ist diese Ausführungsform jedoch sehr teuer.

Die CN 205 661 981 U und die DE 41 03 815 A1 offenbaren dagegen Dosierbandwaagen, bei denen das gesamte Transportband einschließlich des Tragrahmens und der Bandantriebseinrichtung gewogen wird. Die CN 205 661 981 U offenbart eine Wägevorrichtung, die austauschbar unterhalb des Tragrahmens angeordnet und über Schraubhülsen höhenverstellbar befestigbar sind. Aus der DE 41 03 815 A1 ist eine Anordnung bekannt, bei der Blattfedern zwischen Tragrahmen und Wägevorrichtungen zur Beseitigung horizontaler Störkräfte angeordnet sind. Nachteilig an im Ganzem verwogenen Dosiervorrichtungen ist jedoch, dass ihre Anordnung bezüglich der Schüttgutaufgabestelle problematisch sein kann, wenn das Schüttgut beispielsweise aus einem oberhalb der Dosiervorrichtung angeordneten Bunker abgezogen wird. Je nachdem wie das Schüttgut von oben auf das Transportband aufgegeben wird, können hierbei erhebliche Störkräfte auf die gesamte Wägevorrichtung einwirken.

Vor diesem Hintergrund ist es also die Aufgabe der Erfindung, die Nachteile aus dem Stand der Technik zu vermeiden oder wenigstens zu mildern. Insbesondere sollen die Gewichtskräfte aus dem Plattenband ohne Zwangskräfte und Kraftnebenschlüsse in die Wägevorrichtungen eingeleitet werden, um möglichst genaue und fehlerfrei Messergebnisse zu erhalten, so dass die Dosierung des Förderguts so genau wie möglich erfolgen kann.

Diese Aufgabe wird durch eine Vorrichtung mit den Merkmalen des Patentanspruchs 1 gelöst. Vorteilhafte Weiterbildungen der Erfindung sind Gegenstand der Unteransprüche und werden nachfolgend näher erläutert.

Eine erfindungsgemäße Förder- und Dosiervorrichtung umfasst ein endloses Plattenband, welches mittels Laufrollen auf Laufschienen beweglich ist. Das Plattenband weist üblicherweise Stahlblechplatten auf, die sich schuppenartig auf- oder voreinander legen. Die Stahlblechplatten, sogenannte Buckelplatten, sind durch Ketten miteinander verbunden, die dem Umlauf der Stahlblechplatten um eine Antriebs- und Umlenkrolle zu ermöglichen. Dazu sind die Laufrollen, die einen Spurkranz und eine Lauffläche aufweisen, an der Unterseite der Stahlblechplatten befestigt, die auf den dafür vorgesehenen Laufschienen entlanglaufen.

Zur Ermittlung der Masse des transportierten Förderguts sind einander gegenüberliegende Abschnitte der Laufschiene von den angrenzenden Abschnitten getrennt und zur Massenermittlung des Förderguts auf Wägevorrichtungen gelagert, die mit einer elektronischen Auswertevorrichtung verbunden sind. Die elektronische Auswertevorrichtung umfasst eine Wägeelektronik und eine entsprechende Steuerelektronik, so dass die Masse der Förderguts ermittelt und dosiert werden kann. Dazu wird nach Ermittlung der Masse und der Bandgeschwindigkeit die Istförderstärke berechnet und mit einer gewünschten Sollförderstärke verglichen. Die Dosierung erfolgt anschließend durch die Regelung der Fördergeschwindigkeit der Fördervorrichtung. Die Geschwindigkeit der Fördervorrichtung bzw. des Plattenbandes wird über einen drehzahlveränderlichen Antrieb geregelt.

Dabei bilden die zu verwiegenden Abschnitte der Laufschienen, sogenannte Wägeschienen, zusammen mit Längsträgern und mit senkrecht zu den Laufschienen und den Längsträgern angeordneten Querstreben einen Wägerahmen. Dieser Wägerahmen ist direkt unterhalb der Plattenbandebene angeordnet und ist an seinen vier Ecken auf je einer Wägevorrichtung gelagert. Die Wägevorrichtungen sind in Form von Wägezellen, Wägebalken oder Wägesensoren, sogenannten Kraftaufnehmern vorgesehen, deren Signale von einer Wäge- oder Auswerteelektronik ausgewertet werden.

Damit ist die Lagerung der Wägeplattform statisch unbestimmt. Die Aufteilung der Belastung aus den Laufrollen und dem Plattenband auf alle Kraftaufnehmer sollte daher gleichmäßig verteilt werden. Dies lässt sich üblicherweise nur bei der Montage erreichen. Die erfindungsgemäße Lösung sieht daher eine Verbindung der Laufschienen und ihren zugehörigen Längsträgern mit den Querträgern zu einem Wägerahmen vor, so dass die auf die Laufschienen wirkenden Vertikalkräfte gleichmäßig und zentrisch in die Wägevorrichtungen und somit exakt in Messrichtung der Wägevorrichtungen eingeleitet werden können. Außerdem ist zwischen dem Wägerahmen und den Wägevorrichtungen jeweils eine justierfähige Zentriervorrichtung angeordnet. Somit kann der Wägerahmen an die bestehende Unterkonstruktion und die übrigen Laufschienen angepasst werden, damit es nicht zu Versätzen zwischen Laufschiene und Wägeschiene kommt. Die Justage mit Hilfe der Zentriervorrichtung kann dabei in Förderrichtung x, quer zur Förderrichtung y und in vertikaler Richtung z erfolgen.

Vorteilhafterweise ist der Wägerahmen torsionsweich und biegeweich ausgeführt. Dies bedeutet, dass der Wägerahmen bei der Montage den Gegebenheiten der Unterkonstruktion angepasst werden kann, so dass der zu verwiegenden Abschnitt der Laufschienen, die sogenannte Wägeschiene, und die übrigen Abschnitte der Laufschienen exakt aufeinander abgestimmt werden können. Dadurch können Versätze, die zu Schlägen der Laufrollen an den Übergangsstellen und somit zu negativen Einflüssen auf das Messergebnis führen könnten, vermieden werden.

Eine Ausgestaltung der Erfindung sieht vor, dass zur Lasteinleitung der vertikalen Lasten in die Wägevorrichtungen und /oder zur Justage des Wägerahmens an dem Wägerahmen Biegefedern in Form von Blattfedern mit rechteckigem Querschnitt vorgesehen sind. Damit sind die Lasteinleitungselemente des Wägerahmens gegenüber den Wägevorrichtungen exakt definiert. Vorteilhafterweise sind erste Biegefedern in Form von Querstreben des Wägerahmens oder als Verlängerungen der Querstreben des Wägerahmens vorgesehen und bezüglich ihres Rechteckquerschnitts derart angeordnet, dass ihr Flächenträgheitsmoment und somit ihre Biegesteifigkeit hoch hinsichtlich Belastung und Durchbiegung in vertikaler Richtung und klein bezüglich der Belastung und Durchbiegung in Förderrichtung sind.

Erfindungsgemäße weist daher jede Zentriervorrichtung bezüglich der Lagerung des Wägerahmen drei Freiheitsgrade auf. Dementsprechend kann jede Zentriervorrichtung bezüglich der Lagerung des Wägerahmens in x-Richtung, also in Förderrichtung, in y -Richtung, also quer zur Förderrichtung und z-Richtung, also in vertikaler Richtung verstellt oder justiert werden, so dass diese drei Translationsfreiheitsgrade aufweist.

Eine Ausgestaltung der Erfindung sieht daher vor, dass die Zentriervorrichtung zur vertikalen Justage des Wägerahmens eine Wippe mit einem Drehpunkt, einem Lastarm und einem Kraftarm umfasst, wobei je eine erste Biegefeder der Wägeplattform bzw. des Rahmens auf dem Lastarm einer Wippe aufliegt. Vorteilhafterweise kann ein Hebelweg des Kraftarms der Wippe in z-Richtung oder vertikaler Richtung über eine Spindel variabel eingestellt werden.

Zur Justierung des Wägerahmens in Förderrichtung oder quer zur Förderrichtung ist die erste Biegefeder auf der Zentriervorrichtung oder der Wägevorrichtung frei verschieblich gelagert.

Zusätzlich können an der Zentriervorrichtng eine Aufnahme und/oder ein Anschlag für eine zweite Blattfeder des Wägerahmens vorgesehen sein. Dabei ist die zweite Blattfeder senkrecht zur Richtung der ersten Blattfeder an dem Wägerahmen angeordnet.

Die zweite Blattfeder des Wägerahmens ist in Förderrichtung x ebenfalls verschieblich in der Zentriervorrichtung gelagert. Der Verschiebeweg in Förderrichtung x ist jedoch durch einen Anschlag an der Zentriervorrichtung begrenzt.

Weiterhin kann die zweite Blattfeder des Wägerahmens unter Vorspannung in der Aufnahme der Zentriervorrichtung gelagert sein. Vorteilhafterweise wirkt die Vorspannung der zweiten Blattfeder dabei quer zur Förderrichtung.

Gemäß einer alternativen Ausgestaltung der Erfindung kann die vertikale Lasteinleitung aus dem Wägerahmen über eine Zentriervorrichtung erfolgen, die wenigstens ein Pendeldruckstück umfasst. Die Wägezellen weisen dann die Form einer Pendelstütze oder eines Pendellagers auf, so dass beim Auftreten von Horizontalkräften eine horizontale Auslenkung der Wägezelle ohne Messfehler erreicht wird. Als weitere Alternative können selbstzentrierende Elastomerlager zum Einsatz kommen. Zur Vermeidung von horizontalen Störkräften aus Temperatureinflüssen oder Erschütterungen aus dem Bandlauf, die zur Zerstörung der Wägevorrichtungen führen können, sind entsprechende Anschläge, Puffer oder Elastomerlager vorgesehen.

Eine weitere vorteilhafte Ausgestaltung der Erfindung sieht vor, dass zwischen Unterkonstruktion und Wägevorrichtung eine justierfähige Überlastsicherungsvorrichtung vorgesehen ist. Diese ist ebenfalls mit einer Spindel versehen, so dass bei der Montage des Wägerahmens auch hier eine Höhenverstellung vorgenommen werden kann.

Die Erfindung wird nachfolgend anhand eines Ausführungsbeispiels näher erläutert. Es zeigen:
- Fig. 1: eine Fördervorrichtung in Form eines Dosierplattenbandes gemäß dem Stand der Technik,
- Fig. 2: eine perspektivische Ansicht eins Teils einer erfindungsgemäßen Förder - und Dosiervorrichtung mit eingebautem Wägerahmen,
- Fig. 3: eine perspektivische Ansicht des Wägerahmens aus Fig. 2,

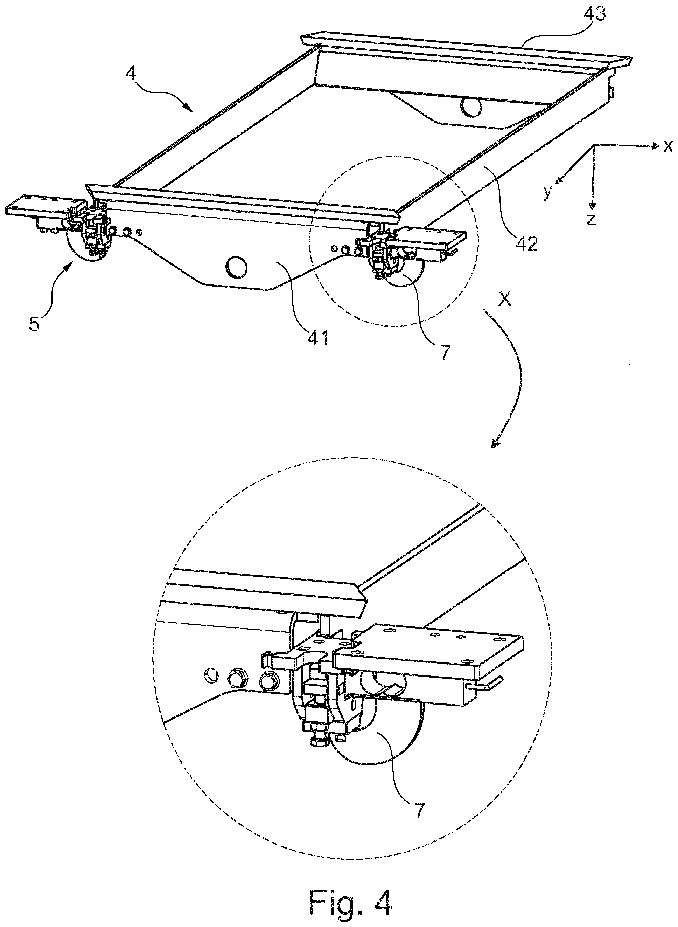

- Fig. 4: eine perspektivische Ansicht des Wägerahmens aus Fig. 2 und Fig. 3 mit zwei Zentriervorrichtungen,
- Fig. 5: einen Schnitt durch den Wägerahmen und die Zentriervorrichtung aus Fig. 4 entlang der Linie V-V

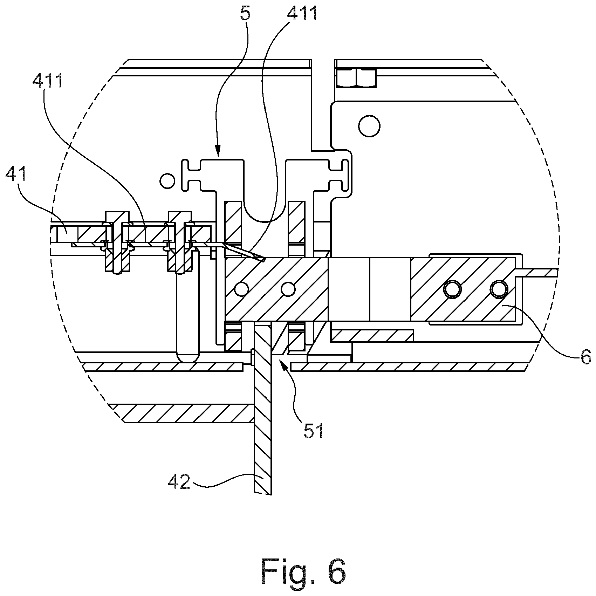

- Fig. 6: einen Schnitt durch den Wägerahmen und die Zentriervorrichtung aus Fig. 5 entlang der Linie VI-VI

Die Figuren sind schematischer Natur und dienen ausschließlich dem Verständnis der Erfindung. Die gleichen Elemente sind mit denselben Bezugszeichen versehen.

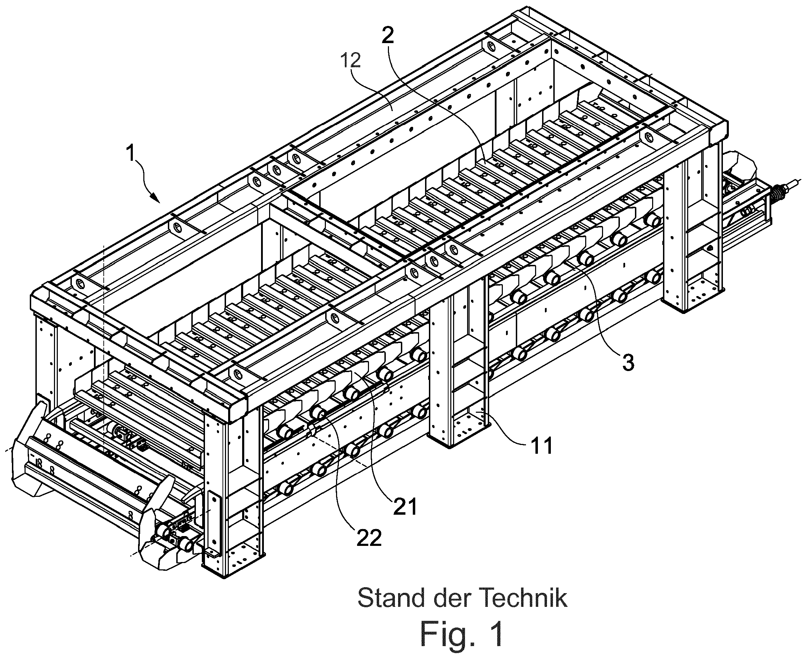

Fig. 1 zeigt einen Plattenbanddosierer mit einer Unterkonstruktion 3 aus Stahlblech auf der ein endloses Plattenband 2 angeordnet ist, das um eine Antriebs- und Umlenkrolle läuft. An den mit Ketten miteinander verbundenen Buckelplatten 21 des Plattenbandes 2 sind Lagerrollen 22 angebracht, die auf einer oder mehreren Laufschienen 3 synchron mit dem Plattenband 2 umlaufen.

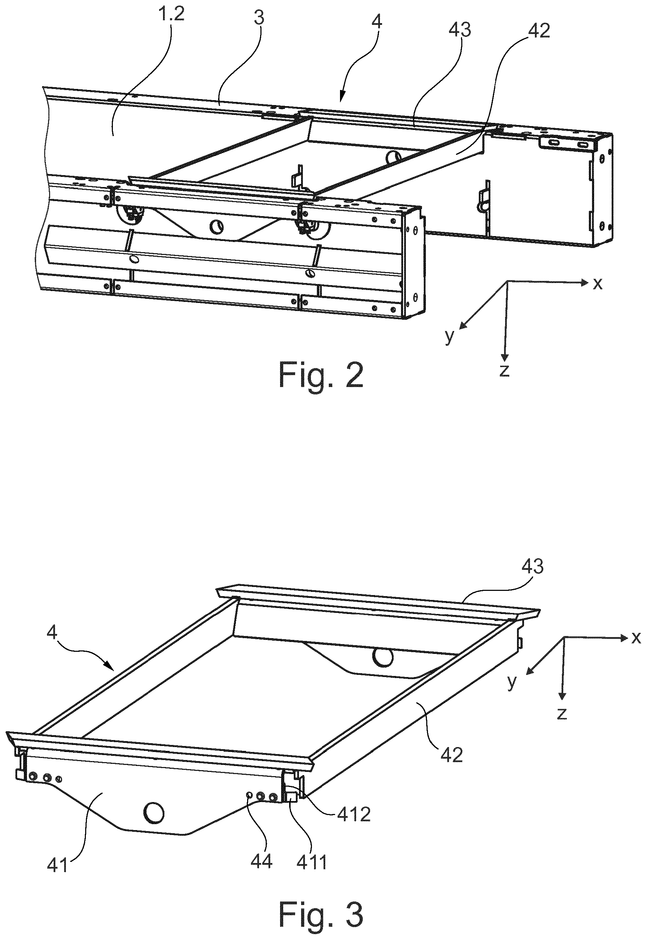

Im Gegensatz dazu zeigt Fig. 2 eine perspektivische Ansicht eines Teils einer erfindungsgemäßen Förder- und Dosiervorrichtung mit eingebautem Wägerahmen 4. Wie aus der Zeichnung ersichtlich ist, ist der Grundrahmen bzw. sind die Rahmenkonsolen 12 der Unterkonstruktion 1 , die aus gekanteten Stahlblechen bestehen, derart ausgeschnitten, dass der Wägerahmen 4, der aus zu verwiegenden Abschnitten der Laufschiene, den sogenannten Wägeschienen 43, und den damit verbundenen Längsträgern 41 sowie Querstreben 42 besteht, beidseitig in die Rahmenkonsole 12 eingesetzt werden kann. Dabei wird der Wägerahmen 4 auf vier Wägevorrichtungen 6, in Form von Kraftaufnehmern aufgelagert. Der Wägerahmen 4 bildet somit eine Art Plattformwaage.

Hierbei ist darauf zu achten, dass alle Kanten der Wägeschienen 43 mit den übrigen Laufschienen 3 fluchten und die Spaltmaße zwischen Wägerahmen 4 und Laufschienen 3 innerhalb der zulässigen Toleranzen liegen. Andererseits müssen die Spalte zwischen Wägeschiene 43 und Laufschiene 3 groß genug sein, damit sich dort kein Schmutz ablagern kann. Der freigeschnittene Schienenstoß minimiert somit Kraftschlüsse zwischen Laufschienen 3 und Wägeschiene 43.

Da der Wägerahmen 4 somit statisch unbestimmt gelagert ist, ist beim Einbau dafür zu sorgen, dass die Wägevorrichtungen 6 gleichmäßig belastet werden und keine Zwangskräfte auftreten. Daher ist der Wägerahmen 4 in Form eines biegeweichen und torsionsweichen Rahmens vorgesehen, der an die Gegebenheiten der Unterkonstruktion angepasst werden kann. Die Vertikallasten aus der Belastung durch das Plattenband 2 und das Fördergut wird jeweils mittels Biegefedern 42 aus dem Wägerahmen 4 über justierfähige Zentriervorrichtungen 5 in die Wägevorrichtungen 6 eingeleitet.

Der Einflussbereich auf den Wägerahmen 4 ist dabei größer als der eigentliche Messbereich, der durch die Fläche des Plattenbandes 2 im Bereich des Wägerahmens 4 definiert wird. Mögliche Störungen aus der Mechanik, beispielsweise durch eine klemmende Buckelplatte 21 wirken sich auf die Gewichtserfassung aus, auch wenn diese Störung nicht im Messbereich liegt. Daher ist es wichtig, dass die Laufrollen 22 horizontal gerade über den Einflussbereich des Wägerahmens 4 laufen und die Spurkränze der Laufrollen 22 nicht seitlich an den Laufschienen schleifen oder an diese stoßen.

Die Laufschienen 3 und Wägeschienen 43 müssen daher in horizontaler Richtung exakt zueinander fluchten, um die Messlast richtig in die Wägevorrichtung 6 einzuleiten.

Eine Wägeelektronik (nicht dargestellt) erfasst die mit den Wägevorrichtungen ermittelten elektrischen Signale und die Plattenbandgeschwindigkeit, berechnet die Messlast und ermittelt daraus die Istförderstärke.

Aus Fig. 3 wird ersichtlich, dass die Querstrebe 42 in diesem Ausführungsbeispiel einen Rechteckquerschnitt aufweist und somit im Ganzen als erste Biegefeder 421 dient. Bei einer alternativen Ausgestaltung der Querstrebe, beispielsweise in Form eines I- oder T-Trägers würde das Profil im Auflagerbereich der Zentriervorrichtung 5 auf den Steg des Profils reduziert werden, um wiederum einen Rechteckquerschnitt und eine Biegefeder zu erhalten. Beim Einbau des Wägerahmens 4 in die Rahmenkonsolen des Grundrahmens bzw. der Unterkonstruktion 3 ist darauf zu achten, dass der Wägerahmen 4 exakt zentriert im Grundrahmen gelagert ist. Hierzu ist am dem Längsträger 41 des Wägerahmens 4 eine zweite Biegefeder 411 angeschraubt. Diese weist eine definierte Vorspannung auf, ist in einer Aufnahme 53 der Zentriervorrichtung 5 gelagert und zentriert somit den kompletten Wägerahmen 4 quer zur Förderrichtung zwischen den vier Zentriervorrichtungen. Hierbei ist die Distanz zwischen einer Zentriervorrichtung 5 und einem Längsrahmen 41 des Wägerahmens 4 über Distanzbleche (nicht dargestellt) einstellbar. Die Verschiebemöglichkeit des Wägerahmens 4 in Förderrichtung x bleibt davon jedoch unbeeinflusst, da die Biegefeder 42 auf der Zentriervorrichtung 5 in Förderrichtung x mit Spiel gelagert ist.

In Förderrichtung x des Plattenbandes 2 soll der Wägerahmen 4 auf Stoß zur Zentriervorrichtung 5 in den Grundrahmen eingesetzt werden. Hierzu weist der Wägerahmen 4 entsprechende Montageöffnungen 44 auf, mittels derer der Wägerahmen 4 auf der Zentriervorrichtung 5 aufliegend in Förderrichtung x oder entgegen dieser Richtung verschoben werden kann. Sobald ein dafür vorgesehener Anschlag 412 der Biegefeder 411 mit einer entsprechenden Stoßkante 54 der Zentriervorrichtung 5 zusammenwirkt, ist der Wägerahmen 4 justiert und die gewünschten Spaltmaße zwischen Laufschienen 3 und Wägeschiene 43 eingestellt.

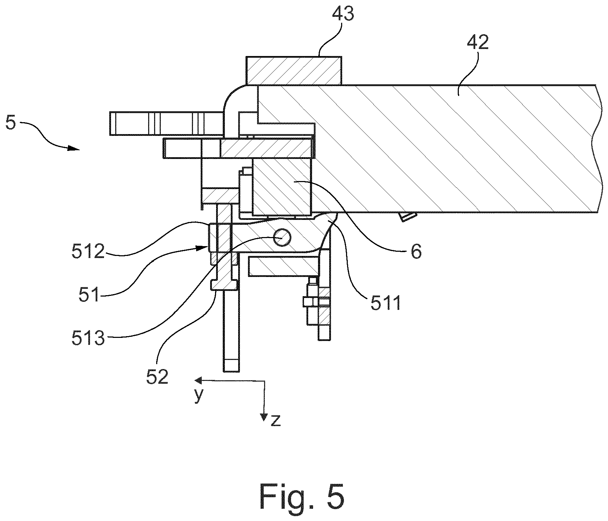

Aus Fig. 5 wird deutlich, dass der Wägerahmen 4 über die vier Zentriervorrichtungen 5 auch bezüglich seiner Höhe in Relation zum Grundrahmen der Unterkonstruktion 3 justiert werden kann. Dazu liegt die Biegefeder 42 bzw. der Querrahmen auf einem Lastarm 511 einer Wippe 51 auf. Diese Wippe 51 besitzt unterhalb der Wägevorrichtung 6 ihren Drehpunkt, so dass über eine Spindel 52 die Auslenkung des Lastarms in vertikaler Richtung z verstellt werden kann. Über das Absenken oder Erhöhen des Lastarms 511 wird die Höhe des Wägerahmens 4 und der Wägeschiene 43 gegenüber der Laufschiene 3 eingestellt. Über die justierfähige Zentriervorrichtung 5 ist somit ein Einbau des Wägerahmens 4 mit einer Überhöhung der Wägeschiene 43 gegenüber der Laufschiene 3 im Zehntelmillimeterbereich möglich. Mit Hilfe einer entsprechenden Überhöhung kann das Eigengewicht des Plattenbandes 2 während der Nutzung ausgeglichen werden, so dass es während der Nutzung der Förderrichtung nicht zu Höhenversätzen an den Stoßkanten von Wägeschiene 43 und Laufschienen 3 kommt. Dadurch wird die Messlast wiederum ohne Erschütterungen in die Wägevorrichtungen 6 eingeleitet.

Vorteilhafterweise kommen Wägevorrichtungen 6 zum Einsatz, die wie eine Plattformwaage außermittig belastet werden können. Die entsprechende Nennlast der Wägevorrichtung 6 kann pro Nutzungsfall an die Fördervorrichtung angepasst werden.

Damit ein Grenzlastwert pro Wägevorrichtung 6 eingehalten und diese somit vor Überlastung und Zerstörung gesichert wird, ist zwischen der Zentriervorrichtung 5 und einer Montageplatte am Grundrahmen der Unterkonstruktion 3 eine Überlastsicherung 7 eingebaut. Der Grenzlastwert wird dabei über die zulässige Verformung/Verschiebung in vertikaler Richtung in Folge der Auflast auf den Wägerahmen 4 definiert. Der entsprechende Weg der Überlastsicherung 7, die in Form einer Scheibe vorgesehen ist, kann ebenfalls über eine Spindel definiert werden.

Insgesamt wird deutlich, dass die erfindungsgemäße Förder - und Dosiereinrichtung mit dem entsprechenden Wägerahmen 4 und den zugehörigen Zentriervorrichtungen 5, die Möglichkeit bietet, kostengünstige Standardkraftaufnehmer für die Ermittlung der Förderstärke zu verwenden. Dadurch dass die Wägeschienen 43 an die vorhandenen Laufschienen 3 des Grundrahmens über die Zentriervorrichtungen 5 angepasst werden können, wird für exakte Messergebnisse ohne Störeinflüsse aus Kraftnebenschlüssen, Stößen oder sonstigen Störfaktoren gesorgt.

### Bezuaszeichenliste

- 1: Unterkonstruktion
11 Stütze
12 Rahmenkonsole
- 2: Plattenband
21 Buckelplatte
22 Laufrolle
- 3: Laufschiene unverwogen
- 4: Wägerahmen
41 Längsträger
411 zweite Biegefeder
412 Anschlag der zweiten Biegefeder
42 Querstrebe
421 erste Biegefeder
43 Abschnitt der Laufschiene, Wägeschiene
- 5: Zentriervorrichtung
51 Wippe
511 Lastarm
512 Kraftarm
513 Drehpunkt
52 Spindel
53 Aufnahme
54 Stoßkante für Anschlag 412 der Biegefeder 411
- 6: Wägevorrichtung
- 7: Überlastsicherung

## Patentansprüche

1. Förder- und Dosiervorrichtung mit
- einem endlosen Plattenband (2), welches mittels Laufrollen (22) auf Laufschienen (3, 43) beweglich ist,
- wobei einander gegenüberliegende Abschnitte der Laufschiene (43) von den angrenzenden Abschnitten getrennt und zur Massenermittlung des Förderguts auf Wägevorrichtungen (6) gelagert sind, die mit einer elektronischen Auswertevorrichtung verbunden sind,
**dadurch gekennzeichnet, dass** die zu verwiegenden Abschnitte der Laufschiene (43) zusammen mit Längsträgern (41) und senkrecht zu den Längsträgern (41) angeordneten Querstreben (42) einen Wägerahmen (4) bilden und dieser Wägerahmen (4) an seinen vier Ecken auf je einer Wägevorrichtung (6) gelagert ist, wobei zwischen dem Wägerahmen (4) und den Wägevorrichtungen (6) jeweils eine justierfähige Zentriervorrichtung (5) vorgesehen ist.

2. Förder- und Dosiervorrichtung gemäß Anspruch 1, **dadurch gekennzeichnet, dass** der Wägerahmen (4) als torsionsweicher und biegeweicher Rahmen ausgeführt ist.

3. Förder- und Dosiervorrichtung gemäß Anspruch 1 oder 2, **dadurch gekennzeichnet, dass** zur Lasteinleitung der vertikalen Lasten in die Wägevorrichtungen (6) oder Zentriervorrichtung (5) und/oder Justage des Wägerahmens (4) an diesem Biegefedern (421, 411) in Form von Blattfedern mit rechteckigem Querschnitt vorgesehen sind.

4. Förder- und Dosiervorrichtung gemäß einem der vorhergehenden Ansprüche , **dadurch gekennzeichnet, dass** jede Zentriervorrichtung (5) bezüglich der Lagerung der Wägerahmens (4) drei Freiheitsgrade aufweist.

5. Förder- und Dosiervorrichtung gemäß einem der vorhergehenden Ansprüche , **dadurch gekennzeichnet, dass** die Zentriervorrichtung (5) bezüglich der Lagerung des Wägerahmens (4) drei Translationsfreiheitsgrade x, y, z in Förderrichtung, quer zur Förderrichtung und in vertikaler Richtung aufweist.

6. Förder- und Dosiervorrichtung gemäß einem der vorhergehenden Ansprüche, **dadurch gekennzeichnet, dass** die Zentriervorrichtung (5) eine Wippe (51) mit einem Drehpunkt (513), einem Lastarm (511) und einem Kraftarm (512) umfasst, wobei je eine erste Biegefeder (42) des Wägerahmens (4) auf dem Lastarm (511) einer Wippe (5) aufliegt.

7. Förder- und Dosiervorrichtung gemäß Anspruch 6, **dadurch gekennzeichnet, dass** ein Hebelweg z des Kraftarms (512) in vertikaler Richtung über eine Spindel (52) variabel einstellbar ist.

8. Förder- und Dosiervorrichtung gemäß Anspruch, **dadurch gekennzeichnet, dass** die erste Biegefeder (42) des Wägerahmens (4) in Förderrichtung x und / oder quer zur Förderrichtung y auf der Zentriervorrichtung (5) oder der Wägevorrichtung (6) frei verschieblich gelagert ist.

9. Förder- und Dosiervorrichtung gemäß einem der vorhergehenden Ansprüche, **dadurch gekennzeichnet, dass** an der Zentriervorrichtung (5) eine Aufnahme (53) und/oder ein Anschlag (54) für eine zweite Blattfeder (411) des Wägerahmens (4) vorgesehen sind .

10. Förder- und Dosiervorrichtung gemäß einem der vorhergehenden Ansprüche, **dadurch gekennzeichnet, dass** die zweite Blattfeder (411) des Wägerahmens (4) in Förderrichtung x verschieblich in der Zentriervorrichtung (5) gelagert ist.

11. Förder- und Dosiervorrichtung gemäß einem der vorhergehenden Ansprüche, **dadurch gekennzeichnet, dass** die zweite Blattfeder (411) des Wägerahmens (4) unter Vorspannung in der Aufnahme (53) der Zentriervorrichtung (5) gelagert ist.

12. Förder- und Dosiervorrichtung gemäß Anspruch 1 oder 2, **dadurch gekennzeichnet, dass** die Zentriervorrichtung (5) ein Pendeldruckstück umfasst.

13. Förder- und Dosiervorrichtung gemäß einem der vorhergehenden Ansprüche, **dadurch gekennzeichnet, dass** zwischen einer Rahmenkonstruktion (1, 12) der Fördervorrichtung und Wägevorrichtung (6) eine justierfähige Überlastsicherungsvorrichtung (7) vorgesehen ist.

## Claims

1. Conveying and metering device having
- an endless apron belt (2) that is movable by means of rollers (22) on guide rails (3, 43),
- wherein sections of the guide rail (43) that are opposite one another are separated from the adjacent sections and, for determining the mass of the conveyed material, are supported on weighing devices (6) that are connected to an electronic analysis device,
**characterized in that** the sections of the guide rail (43) to be weighed, together with longitudinal members (41) and transverse struts (42) that are perpendicular to the longitudinal members (41), form a weighing frame (4), and this weighing frame (4) is supported at each of its four corners on a separate weighing device (6), wherein an adjustable centering device (5) is provided between the weighing frame (4) and each of the weighing devices (6).

2. Conveying and metering device according to claim 1, **characterized in that** the weighing frame (4) is designed as a torsionally soft and flexurally soft frame.

3. Conveying and metering device according to claim 1 or 2, **characterized in that** for load application of the vertical loads to the weighing devices (6) or centering device (5) and/or for adjustment of the weighing frame (4), cantilever springs (421, 411) are provided thereon in the form of leaf springs with a rectangular cross section.

4. Conveying and metering device according to one of the preceding claims, **characterized in that** each centering device (5) has three degrees of freedom with respect to the support of the weighing frame (4).

5. Conveying and metering device according to one of the preceding claims, **characterized in that** the centering device (5) has, with respect to the support of the weighing frame (4), three translational degrees of freedom x, y, z in the conveying direction, at right angles to the conveying direction, and in the vertical direction.

6. Conveying and metering device according to one of the preceding claims, **characterized in that** the centering device (5) includes a rocker (51) with a pivot point (513), a load arm (511), and a force arm (512), wherein a first cantilever spring (42) of the weighing frame (4) rests on the load arm (511) of each rocker (5).

7. Conveying and metering device according to claim 6, **characterized in that** a lever travel z of the force arm (512) in the vertical direction is variably adjustable through a screw (52).

8. Conveying and metering device according to claim **characterized in that** the first cantilever spring (42) of the weighing frame (4) is supported on the centering device (5) or the weighing device (6) in a freely movable manner in the conveying direction x and / or at right angles to the conveying direction y.

9. Conveying and metering device according to one of the preceding claims, **characterized in that** a seat (53) and/or a stop (54) for a second leaf spring (411) of the weighing frame (4) is provided on the centering device (5).

10. Conveying and metering device according to one of the preceding claims, **characterized in that** the second leaf spring (411) of the weighing frame (4) is supported in the centering device (5) so as to be movable in the conveying direction x.

11. Conveying and metering device according to one of the preceding claims, **characterized in that** the second leaf spring (411) of the weighing frame (4) is supported in the seat (53) of the centering device (5) under preloading.

12. Conveying and metering device according to claim 1 or 2, **characterized in that** the centering device (5) includes a self-aligning pressure piece.

13. Conveying and metering device according to one of the preceding claims, **characterized in that** an adjustable overload protection device (7) is provided between a frame structure (1, 12) of the conveying device and weighing device (6).

## Revendications

1. Dispositif de convoyage et de dosage avec
- une bande à plaques sans fin (2) qui peut être déplacée au moyen de galets (22) sur des glissières (3, 43),
- dans lequel des portions opposées entre elles de la glissière (43) sont séparées des portions adjacentes et sont logées sur des dispositifs de pesage (6) pour la détermination de la masse du produit à convoyer, qui sont reliés avec un dispositif d'analyse électronique,
**caractérisé en ce que** les parties à peser de la glissière (43) constituent, avec des supports longitudinaux (41) et des traverses (42), disposées perpendiculairement aux supports longitudinaux (41), un châssis de pesage (4) et ce châssis de pesage (4) est monté, à ses quatre angles, sur un dispositif de pesage (6), dans lequel, entre le châssis de pesage (4) et les dispositifs de pesage (6) est prévu respectivement un dispositif de centrage (5) pouvant être ajusté.

2. Dispositif de convoyage et de dosage selon la revendication 1, **caractérisé en ce que** le châssis de pesage (4) est conçu comme un châssis souple en torsion et en flexion.

3. Dispositif de convoyage et de dosage selon la revendication 1 ou 2, **caractérisé en ce que**, pour l'application des charges verticales aux dispositifs de pesage (6) ou au dispositif de centrage (5) et/ou pour l'ajustement du châssis de pesage (4), des ressorts de flexion (421, 411), sous la forme de ressorts à lames avec une section transversale rectangulaire, sont prévus sur celui-ci.

4. Dispositif de convoyage et de dosage selon l'une des revendications précédentes, **caractérisé en ce que** chaque dispositif de centrage (5) présente trois degrés de liberté par rapport au palier du châssis de pesage (4).

5. Dispositif de convoyage et de dosage selon l'une des revendications précédentes, **caractérisé en ce que** le dispositif de centrage (5) présente, par rapport au palier du châssis de pesage (4), trois degrés de liberté en translation x, y, z dans la direction de convoyage, transversalement par rapport à la direction de convoyage et dans la direction verticale.

6. Dispositif de convoyage et de dosage selon l'une des revendications précédentes, **caractérisé en ce que** le dispositif de centrage (5) comprend une bascule (51) avec un centre de rotation (513), un bras de charge (511) et un bras de force (512), dans lequel un premier ressort de flexion (42) du châssis de pesage (4) repose sur le bras de charge (511) d'une bascule (5).

7. Dispositif de convoyage et de dosage selon la revendication 6, **caractérisé en ce qu'**un trajet de levier z du bras de force (512) dans la direction verticale peut être réglée de manière variable par l'intermédiaire d'une broche (52).

8. Dispositif de convoyage et de dosage selon la revendication, **caractérisé en ce que** le premier ressort de flexion (42) du châssis de pesage (4) est monté de manière coulissante librement dans la direction de convoyage x et/ou transversalement par rapport à la direction de convoyage y sur le dispositif de centrage (5) ou le dispositif de pesage (6).

9. Dispositif de convoyage et de dosage selon l'une des revendications précédentes, **caractérisé en ce que**, sur le dispositif de centrage (5), est prévu un logement (53) et/ou une butée (54) pour un deuxième ressort à lame (411) du châssis de pesage (4).

10. Dispositif de convoyage et de dosage selon l'une des revendications précédentes, **caractérisé en ce que** le deuxième ressort à lame (411) du châssis de pesage (4) est logé dans le dispositif de centrage (5) de manière coulissante dans la direction de convoyage x.

11. Dispositif de convoyage et de dosage selon l'une des revendications précédentes, **caractérisé en ce que** le deuxième ressort à lame (411) du châssis de pesage (4) est logé avec une précontrainte dans le logement (53) du dispositif de centrage (5).

12. Dispositif de convoyage et de dosage selon la revendication 1 ou 2, **caractérisé en ce que** le dispositif de centrage (5) comprend un élément de pression pendulaire.

13. Dispositif de convoyage et de dosage selon l'une des revendications précédentes, **caractérisé en ce que**, entre une structure de châssis (1, 12) du dispositif de convoyage et un dispositif de pesage (6), est prévu un dispositif de protection contre les surcharges (7) ajustable.
